# EUROPEAN PATENT SPECIFICATION

(11) **EP 1 795 781 B1**
(45) Date of publication and mention of the grant of the patent: **11.11.2009**
(21) Application number: 05776660.2
(22) Date of filing: 01.09.2005
(51) Int. Cl.: F16H 55/14, F16F 15/02

(54) **VIBRATION DAMPING MEMBER FOR MACHINE PART AND METHOD OF MANUFACTURING THE SAME**
SCHWINGUNGSDÄMPFUNGSGLIED FÜR MASCHINENTEIL UND HERSTELLUNGSVERFAHREN DAFÜR
ÉLÉMENT AMORTISSEUR DE VIBRATIONS POUR PIÈCE D'USINAGE ET PROCÉDÉ DE FABRICATION DUDIT ÉLÉMENT

(30) Priority: 03.09.2004 JP 2004256452; 25.03.2005 JP 2005088162
(43) Date of publication of application: 13.06.2007
(73) Proprietor: Aichi Steel Corporation, Tokai-shi, Aichi-Ken 476-8666 (JP)
(72) Inventor: NISHIKAWA, Tomoaki, Tokai-shi, Aichi 4768666; (JP); TANAKA, Tatsuo, Tokai-shi, Aichi 4768666; (JP); ITO, Yukio, Tokai-shi, Aichi 4768666; (JP)
(74) Representative: Schmidtchen, Jürgen Christian
(86) International application number: PCT/JP2005/015999
(87) International publication number: WO 2006/025488

(56) References cited:
- DE-A1- 2 653 394
- DE-B1- 2 758 468
- DE-C- 707 779
- FR-A- 324 239
- GB-A- 215 082
- JP-A- 9 026 015
- JP-A- 10 272 077
- JP-A- 50 061 555
- JP-A- 54 120 352
- JP-A- 58 074 234
- JP-A- 60 018 635
- JP-A- 2000 120 777
- JP-A- 2002 235 836
- US-A- 1 662 506
- US-A- 1 941 521
- US-A- 4 292 832
- US-A- 4 891 077

## Description

### BACKGROUND OF THE INVENTION

### 1. Field of the Invention

The present invention relates to a material for purposes of processing parts for use in areas such as automobiles, construction machines, and industrial machines. Inparticular, the present invention relates to a material for damping mechanical parts, and a method for manufacturing thereof, that is capable of enhancing damping properties significantly, irrespective of whatever type of material is used.

### 2. Description of the Related Art

In areas such as automobiles, construction machines, and industrial machines, each functional unit is driven by means of power generated by equipment such as an engine or a motor. Parts used in these machines have a variety of requisite characteristics that vary with the part, and appropriate materials are selected and used that conform with the characteristics concerned, such as surface resistance and bending strength.

These materials, most of which are alloys made up of materials such as Fe or Al, entail a disadvantage insofar that problems cannot easily be solved by the quality of the material compositions per se. In other words, parts made of these alloys tend to transmit vibration generated in the environment in which they are used, and, further, they are limited in terms of their capability to damp vibration by means of only the parts themselves. As a result, noise is produced, the level of quietness is lowered, and on occasions, due to such vibration, the service life of the parts affected may be lowered, or otherwise adversely.

For example, in recent automobiles, demanding requirements on the part of a user cannot be satisfied merely by a superior engine performance, and demands have grown for high level of quietness within vehicles at times when they are being driven. In the case of automobiles, one of the main causes of the incidence of noise is gear noise. In general, many of the gears that are responsible for incidences of noise are subjected to carburizing treatment, and it has become known that such incidences of noise are caused by the fact that the mating of gears has been adversely affected by the occurrence of distortion during heat treatment. Therefore, a variety of technical developments has been actively pursued with a view to reducing levels of a heat treatment distortion, and technical developments have also been strongly demanded for shutting out, or for reducing incidences of noise or vibration.

If gear noise of this kind is adopted as an example, in order to prevent such incidences of noise, it is not impossible to conceive of a method for carrying out finish processing a second time after the completion of carburizing treatment, thereby eliminating the heat treatment distortion. However, tremendously large amounts of costs are required for such finish processing. Further, while it is technically possible to provide damper mechanisms for gears, or for units in which such gears are contained, considerations of costs arise relating to securing the space required and relating to increases in the number of parts, and it needs to be recognized that so far, countermeasures have not been successfullyadopted. Therefore, a strong demands have been made for technical developments that enable a user to obtain a degree of quietness which is acceptable, even when incidences of distortion induced by carburizing still remain in the gear that has been manufactured.

The most direct method of securing an improvement by solving this problem is a method for manufacturing parts by means of damping materials and by promoting absorption of vibration by the parts per se. As conventionally known damping materials, high alloys made of an iron group, pure Mg, a Mg-alloy, or a Mn-Cu alloy are well known. However, it goes without saying that such damping materials are all expensive. In addition, a problem arises insofar that a sufficient degree of strength cannot be guaranteed in cases where the damping materials are used as parts for mechanical structures. Further, with regard also to a composite steel plate having superior damping properties, which is known in the field of steel plate, parts for mechanical structures, in particular, parts for power transmission, suffer from a disadvantage in terms of a problem caused by the shape of steel plate, and the extent to which such parts can be used is extremely small. Therefore, a strong demand has grown for the development of material that are capable of imparting superior damping properties without such problems of arising, irrespective of the type of material being used.

As a measure that is capable of enhancing damping properties without the use of materials that have the kind of superior damping properties described above, a conventionally well known method exists for introducing deliberately an interface such as cracks, which are not metal-coupled, into the parts, and well known for example, are the techniques described in documents such as patent documents 1 and 2.

Among such technique, a technique described in patent document 1 is to form a brittle layer (portion) in a material, follow up by applying a thermal shock such as excessive heating and rapid cooling, and thereby intentionally create cracks within the material so as to enhance damping properties.

Patent document 1 : JP 52-147510 Unexamined Patent Publication (Kokai)
Patent document 2: JP 2000-35082 Unexamined Patent Publication (Kokai)

DE 27 58 468 discloses a method for manufacturing a vibration attenuating metal material by generating surface recesses, wherein a workpiece of a bar-shaped metal raw material is provided with a plurality of grooves essentially in the direction of the central axis of the metal raw material, and then the metal raw material provided with the grooves is rolled in the direction of the central axis, such that the grooves are closed.

US 4,292,832 discloses a method of producing a vibration attenuating material having the steps of forming a multiplicity of grooves in the surface of a ductile raw material, and subjecting said raw material to a drawing or a rolling work thereby to form a multiplicity of fine friction interfaces in the surface region of said vibration attenuating material, wherein said vibration attenuating material is formed such that each of said friction interfaces is composed of a vertical component perpendicular to the surface of said vibration attenuating material and inclined components inclined to said surface of said vibration attenuating material.

FR 324,239 relates to a method for manufacturing bars or tubes of metal having an enhanced flexibility and a sufficient tensile strength, wherein the method comprises providing the bar or tube with radial bore holes and then rolling the bar or tube having the bore holes such that the diameter of the bar or tube is reduced and the bore holes are closed.

### DISCLOSURE OF THE INVENTION

### SUMMARY OF THE INVENTION

However, the conventional inventions mentioned previously entail the following problems.
One feature of the invention described in patent document 1 mentioned above is that, in order to form a brittle layer inside a material, in the case of a low carbon steel, carburizing is deliberately performed, or that a high carbon steel that is a brittle material is used in advance, thereby imparting a heat shock, such as rapid cooling to the steel.

Therefore, in seeking to enhance the damping properties of mechanical parts by utilizing the technique of patent document 1, carburizing needs to be performed on a portion that does not require carburizing from the viewpoint of strength, or a brittle material such as a high carbon steel has to be used for a portion for which it is not suitable to use a high carbon steel. As a result, it is impossible to select a material that is essentially regarded as the most appropriate or a heat treatment that is suitable, and a problem arises that options in the selection of materials or methods of heat treatment are significantly limited.

In addition, a feature of the invention described in patent document 2, as described in the related specification, is the utilization of a burning and curing capability. In other words, a feature of the invention is the use of a metal plate that has a significant burning and curing capability and a high level of crack sensitivity so as to formbead portions at portions where cracking needs to be induced, and to, then, impart cracks. Therefore, inevitably, the advantageous effects of this technique cannot be attained unless a metal plate with a high degree of burning and curing capability is used, and a problem arises insofar that in addition to the disadvantages caused by the factor of the shape of the steel plate, the scope within which the technique can be applied.

The present invention has been made in order to solve the foregoing problem. An object of the present invention is to provide a damping material for mechanical parts with which the factor of limitations on the quality of materials is reduced, the selection of materials of a quality that conforms with requirements is facilitated, the damping materials can be widely applied to substantial numbers of mechanical parts, and with which material even more outstanding damping properties can be easily obtained.

### MEANS FOR SOLVING THE PROBLEM

According to a first aspect of the present invention, a damping material for mechanical parts includes a non-coupling interface that comes into contact without being metallically coupled, the non-coupling interface being formed by not forging a groove portion formed by plastic processing and/or mechanical processing in a direction in which an internal space of the groove portion is reduced, and the non-coupling interface is formed in a ring shape and is formed from a surface to a predetermined internal depth, and does not penetrate.

According to the present invention, as a result of the assiduous studies made in order to minimize restrictions in terms of both the factors of the quality of material and the shape, by making the discovering described below, it has proved possible to provide parts with which restriction placed on the aspect of the quality of material are extremely reduced and parts of which damping properties have been enhanced over a wide range.

(1) In the previous patent application described above, cracks were created by means of thermal shock. Thus, it becomes essential to perform processing for purposes of selecting a brittle material or for making abrittlematerial deliberately. Inevitably, therehas been a disadvantage that the quality of material that can be used has been extremely limited. However, the inventor reached the conclusion that similar damping effects might be attained if a non-coupling interface could be generated without induced by a thermal shock. Therefore, for example, a non-coupling interface was deliberately imparted utilizing plastic processing, and/or mechanical processing, and then, an evaluation of damping properties was performed. As a result, the inventor discovered that, even in cases of a non-coupling interfacedeliberatelyinduced byprocessing,depending on the shape of the interface, a sufficient degree of improvement in damping property effects can be attained. In addition, a non-coupling interface can be generated by means of plastic processing, and/or mechanical processing, for example, according to a method of manufacturing that will be described later. Thus, an advantage accrues, insofar that, as long as a quality of material can be applied by means of such processing activities, significant damping effects can be attained, and at the same time, in comparison with the inventions described in the patent documents, limitation on the quality of material used can be substantially reduced.

(2) In the present invention, for example, a non-coupling interface is generated by means of plastic processing, and/or mechanical processing. Thus, naturally, the position and shape of the non-coupling interface that are convenient for mechanical parts can bedetermined. Therefore, anon-couplinginterfacecan be provided at a position at which no problem occurs from the viewpoint of the strength of the parts (in other words, at a position at which a high degree of stress is not applied). It thus becomes possible to obtain a material with which it is possible to manufacture mechanical parts with which no problem occurs from the viewpoint of strength, in spite of having a non-coupling interface.

(3) In order to secure superior damping properties, it is necessary that a gap between non-coupling interfaces that are generated is narrowly closed, and that they make contact without being metallically coupled. In this context, "contact" may also be construed to include circumstance where, as viewed microscopically, a non-contact portion partially exists, and "contact" also includes any instances where nominal interface contact is made.

According to a second aspect of the present invention, a method is provided for manufacturing a damping material for mechanical parts that has a non-coupling interface that comes into contact without being metallically coupled, the method comprising:
a groove portion forming step of molding by means of plastic processing and/or mechanical processing a groove portion that serves as a base of a non-coupling interface formed in a ring shape on a surface of the material; and
a compression step of applying not forging in a direction in which an internal space of the groove portion is reduced, and by then establishing a state in which contact is made with opposing internal wall faces, thereby forming the ring shaped non-coupling interface.

According to the manufacturing method of the present invention, a superior damping material for mechanical parts of a type described above can be reliably manufactured.

According to a third aspect of the present invention, mechanical parts are fabricated by applying processing to the damping material for the mechanical parts according to the present invention. When a superior damping material for mechanical parts of the type described above is used as a material, mechanical parts such as gears forming a gear portion on the damping material for mechanical parts, and fabricated by application of processing to the damping material, have an outstanding degree of damping properties and are useful.

### BRIEF DESCRIPTION OF THE SEVERAL VIEWS OF THE DRAWINGS

FIG. 1 is an explanatory view of a shape immediately after processing of a groove in a state in which of a non-coupling interface is being molded in Example 1;
FIG. 2 is an explanatory view of a state after the molding of a non-coupling interface in Example 1;
FIG. 3 is an explanatory view of a change in a logarithmic decrement in circumstances where a depth of a non-coupling interface has been changed in Example 1;
FIG. 4 is an explanatory view of a vibration position at a time of evaluating the damping properties of a spur gear in Example 2;
FIG. 5 is an explanatory view of a first material in Example 4 (comparative example);
FIG. 6 is an explanatory view of a second material in Example 4 (comparative example);
FIG. 7 is an explanatory view of a spur gear of a pin-pressing type in Example 4 (comparative example);
FIG. 8 is an explanatory view of an example of a shape of a non-coupling interface;
FIG. 9 is an explanatory view of an example of a shape of a non-coupling interface;
FIG. 10 is an explanatory view of an example of a shape of a non-coupling interface;
FIG. 11 is an explanatory view of an example of a shape of a non-coupling interface;
FIG. 12 is an explanatory view of an example of a shape of a non-coupling interface;
FIG. 13 is an explanatory view of an example of a shape of a non-coupling interface; and
FIG. 14 is an explanatory view of an example of a shape of a non-coupling interface.

### BEST MODE FOR CARRYING OUT THE INVENTION

Hereinafter, preferred embodiments of the present invention will be described with reference to the accompanying drawings.
A non-coupling interface in a damping material for mechanical parts according to the present invention can be molded by executing at least a step of forming a groove portion and step of compression, as is the case with the invention according to the second aspect. The step of forming the groove portion is carried out by means of plastic processing or mechanical processing, or alternatively, by means of a combination of such processing activities. In addition, the step of compression is carried out by means of plastic processing. These processing activities can be appropriately selected so as to conform with the quality of the material, and may be carried out by means of either cooling or heating.

In particular, mechanical parts are often manufactured by means of forging because of its superior productivity. Therefore, in circumstances where the present invention is applied to parts that have been conventionally manufactured by means of forging, the conventional step of forging is redesigned into a step that facilitates the step of forming the groove portion and the step of compression, thereby making possible the manufacture of mechanical parts in which a non-coupling interface can be induced without lowering levels of productivity significantly.

Furthermore, processing of a groove portion in the course of the step for forming the groove portion can also be carried out by means of mechanical processing. In such circumstances, a groove portion may be processed in a shape such that the internal space of the groove portion is finally narrowly closed. Thus, a mechanical processing method need not in particular be limited, and a variety of means can be selected. However, in cases where the groove portion is processed by means of plastic processing such as hot forging or cool forging, a V-groove can be easily processed and easily formed. Of course, the V-groove can also be formed by means of mechanical processing.
In the case of utilizing forging, the step of forming the groove portion can be carried out by means of forging by means of a die that has a protrusive portion that corresponds to the groove portion. In addition, a desired shape can be selected as a shape for that protrusive portion, thereby making it possible to control the shape of the groove portion.

As described above, by use of the manufacturing method according to the second aspect, the non-coupling interface is formed from a surface to a predetermined internal depth, and does not penetrate. In such circumstances, the damping material can be fabricated as one part, and thus, an interface with a superior degree of dimensional precision and stability can be obtained.

Furthermore, with regard to the non-coupling interface generated, effect of improvements in damping property are influenced in proportion to size, thus making it necessary to generate a non-coupling interface that is sufficiently large. In other words, the larger the area of an interface becomes, the greater are the effects in respect to damping vibration. Specifically, it is preferable that an extent of a depth of the non-coupling interface be equal to or greater than 20% of a dimensional thickness in an identical direction. One reason why a lower limit of the depth is set at 20% is that the advantageous effects of damping vibration may not be sufficiently obtained if the lower limit is less than 20%. In addition, although an upper limit is not specifically specified, even if a non-coupling interface has been selectively manufactured so that its area becomes a portion at which a large degree of stress is not applied, in the circumstances where a problem of strength might occur as a result of a situation such as shape of the parts and stress being applied, it is necessary to properly judge the upper limit of the depth of the interface according to parts to be applied. It is desirable that the nominal upper limit be equal to, or less than, of the order of 90%. In order to attain a sufficient damping effect, it is desirable that the depth of the interface be equal to, or greater than, 50% of the dimensional thickness in the same direction.

Furthermore, as described above, a non-coupling interface can be molded by: in the first instance molding, by means of plastic processing, and/or mechanical processing, a groove portion that becomes the base of the non-coupling interface; by then further applying not forging in a direction in which the internal space of the groove portion is reduced; by further applying not forging in order to make the internal space of the groove portion as small as possible; and by establishing a state in which the non-coupling interface that is molded nominally comes fully into contact. The non-coupling interface may be finally established in a nominal contact state, thus it is unnecessary to limit in particular a sectional shape of a groove portion that is to be processed initially. A shape can be freely selected that is convenient in terms of processing (for example, a shape that does not raise concerns about a problem over the service life of a die, and which can be easily processed in cases where processing is carried out by means of forging).

After groove processing has been carried out, the molding of an interface can be completed by applying processing in a direction in which the internal space of the groove portion is reduced, by means of not forging, and by then, carrying out not forging until the interface that is finally molded has been established in a fully substantial contact state. Interface contact used in this context is essentially nominal, and there is no need to consider strictly whether or not a complete contact has been established. Therefore, even when a non-contact portion has been partially found as a result of microscopic observation, such a non-contact portion does not deviate from the scope of the present invention, and it is sufficient if processing is applied in a state in which substantial contact can be established with the naked eye. Damping properties can be significantly improved by carrying out not forging until the above state has been established.

As described above, one of the aspects of a non-contact interface is a non-penetrative interface formed from the surface to a predetermined internal depth. Such an interface can be formed by means of a combination of the step of forming a groove portion by use of plastic processing and/or mechanical processing and a compression step in which not forging is used.

Next, when a damping material for mechanical parts is used as a gear, advantageous effects can be efficiently utilized. Thus, this damping material can be used as a gear damping material for forming gears that have damping characteristics. In such circumstances, the damping material has a main body portion formed in a ring shape or in a disk shape, and a predetermined portion to form teeth shape provided at an outer periphery side face or at an inner periphery side face thereof, and wherein the non-coupling interface is formed from at least one end face in an axial direction of the main body portion.

Gears are parts that serve to transmit power of an engine or the like by mating of teeth, but stress is not applied uniformly to the entirety of the parts of the gears. Because a drive force is applied intensively onto the gear portion, at positions that are distant from the teeth portion, i.e., for example, in a gear in which teeth are processed on the outer periphery or the inner periphery, a large degree of force is never applied to regions other than the outer periphery, or the inner periphery teeth portion. Occasionally, gears may be used while through holes are being partially provided for purposes of weight reduction. Therefore, the inventor et al, paid attention to a state in which stress was appliedonto such a gear, molded a non-coupling interface at a position that was appropriately distant from the region in which the teeth were to be processed, and then, carried out a fatigue test by applying a drive force onto the gear that was manufactured in a manner that was identical to that in which the gear is actually used. As a result, it could be appreciated that a limitation on gear strength occurs as a result of damage to a teeth portion, and not as a result of damage from a non-coupling interface when an increased degree of drive force was applied, and the effectiveness of the present invention was thereby verified. Accordingly, manufacture of a gear with significantly superior damping properties can be easily achieved by using the damping material according to the present invention.

As described above, by creation of the non-coupling interface, damping properties are improved very significantly at the material stage prior to the processing of the teeth, but in circumstances where teeth are processed on the material in order of use the interface as a gear, and, the gear is then formed in the shape of a product, and damping properties are even more significantly enhanced (the degree of such improvements is specifically demonstrated in embodiments described below.) The reasons why damping properties are significantly enhanced by applying processing to the shape of the gear has not yet been sufficiently clarified. However, one of the possible reasons is that the teeth are processed on the outer periphery, and that their distance from the non-coupling interface thereby, becomes close. In addition, in the case of gears, while carburizing treatment is often carried out in circumstances where a high degree of strength needs to be obtained, according to the present invention superior damping properties can be attained, irrespective of whether or not carburizing treatment has been carried out.

According to the present invention the non-coupling interface is formed in a ring shape. Therefore, transmission of vibration inside or outside this ring shape can be reliably inhibited.
Furthermore, in these circumstances, the non-coupling interface can be formed in a cyclic shape. In cases where a cyclic shape has been employed, the non-coupling interface can be easily formed.
In addition, the non-coupling interface can be formed in an asymmetrical shape. Such asymmetrical shapes include: an inequilateral polygon, an irregular wave, or and various other shapes. In such circumstances, damping effects can be further enhanced.

### Example 1

A damping material for mechanical parts according to the present invention will now be described by way of examples in comparison with Comparative Examples. Chemical components of a steel used as a sample material is 0.21%C-0.32%Si-0.77%Mn-1.16%Cr-0.16%Mo-0.032%Al-0.0 11%N steel, and a JIS-SCM420H round bar, which is readily available commercially, was used.

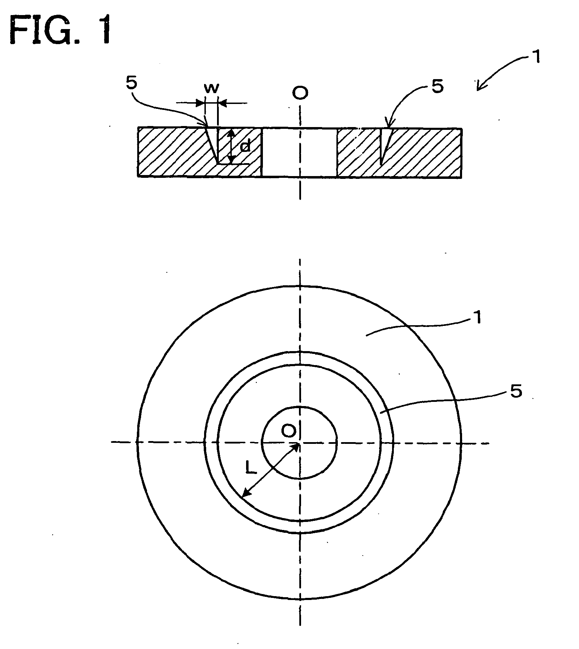

As shown in FIG. 1, by preparing a sample material 1 having an external diameter of 120 mm, an internal diameter of 25 mm, and thickness of 20 mm of this SCM420H and by striking a cylindrical jig (not shown) as a substitute for a die, a groove portion 5 with a width "w" (maximum) of 6mm and a depth "d" of 7 mm to 15 mm of a circular shape and concentric to a material (a shape in which the depth of the groove becomes narrower in width, as shown in FIG. 1) was molded on a surface by dividing a distance L from a center O into three levels. Further, a groove applied by means of mechanical processing in a shape, similar to that of the groove was fabricated by means of the use of another sample material that has the same dimensions, and that consisted of the same components (step of forming the groove portion).

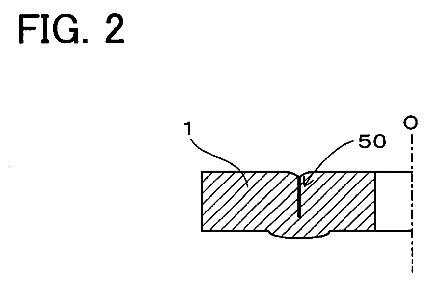

Next, with respect to a groove processed by hot forging, by means of hot forging without cooling after groove processing, processing can be continuously applied in a direction in which the space in the groove is reduced (in a state in which a round bar conforming to the dimensional internal diameter is inserted) until such time as the space in the groove has been reduced to the minimum possible extent (step of compression). As a result, a state was apparently established in which the internal diameter and the outer diameter of the groove that was molded come into contact with each other. A test piece after processing was cut in that state, and then, a cross section was observed, as shown in FIG. 2, but a non-coupling interface 50 that was molded nominally substantially came into contact as far as the inside. Furthermore, with respect also to the groove processed by means of mechanical processing, although that groove was processed in a similar fashion by means of hot forging, and was cut, and a cross section was verified, a state was established in which the interface nominally came into contact as far as the inside.

Next, a material molded by hot forging was processed into a shape of an external diameter of 96 mm, an internal diameter of 25 mm, and a thickness of 16 mm, and the material thus processed was obtained as a damping material for mechanical parts (damping material for gears). The diameter of the non-coupling interface after mechanical processing was processed while the position of the groove portion 5 was divided into three sections at the time of groove processing. Thus, as shown in Table 1, after mechanical processing, 50 mm (test No. E11), 60 mm (test No. E12), and 75 mm (test No. E13) were obtained, and the depth of the non-coupling interface 50 obtained was 4 mm to 13 mm. In addition, with regard also to a material round bar that did not have a non-coupling interface consisting of the same components, a round bar that served as a comparative material (test No. C11), mechanical processing was carried out in an identical fashion, and processing was carried out in order to obtain the same dimensions. Then, damping properties, to be described later, were evaluated by use of test pieces after mechanical processing.

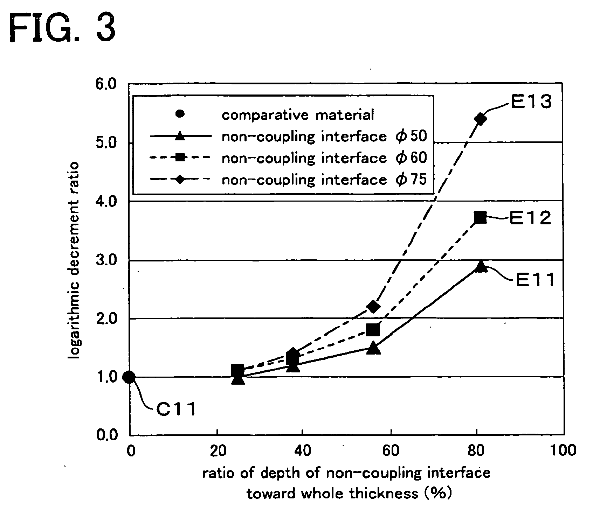

Damping properties were evaluated in accordance with a method for suspending by means of two wires, the ring shaped material prepared in the manner already described, by vibrating an external diameter end by hammer, and by then, using a laser displacement gauge to measure the degree of vibration at a diagonal external diameter end, vibration that had been generated by means of deliberately applying vibration. Then, a logarithmic decrement was calculated from a waveform of the vibration obtained, and then, an enhanced level of damping properties was evaluated by means of the value calculated. The results are shown in Table 1 and FIG. 3.

[Table 1]

**(Table 1)**

| section | non-coupling interface diameter (mm) | non-coupling interface depth (mm) | ratio of depth toward whole thickness (%) | logarithmic decrement ratio | test No. |
|---|---|---|---|---|---|
| comparative example | - | 0 | 0 | 1.0 | C11 |
| present invention | 50 | 4 | 25 | 1.0 | E11 |
| | | 6 | 38 | 1.2 | |
| | | 9 | 56 | 1.5 | |
| | | 13 | 81 | 2.9 | |
| | 60 | 4 | 25 | 1.1 | E12 |
| | | 6 | 38 | 1.3 | |
| | | 9 | 56 | 1.6 | |
| | | 13 | 81 | 3.7 | |
| | 75 | 4 | 25 | 1.1 | E13 |
| | | 6 | 38 | 1.4 | |
| | | 9 | 56 | 2.2 | |
| | | 13 | 81 | 5.4 | |

As is evident from Table 1 and FIG. 3, and as demonstrated in this Example, it is clear that in comparison with a conventional material (C11) that does not have a non-coupling interface at all, test pieces (E11 to E13) in which a non-coupling interface 50 was introduced into the material by means of utilizing plastic processing, and/or mechanical processing, have a remarkably high level of logarithmic decrement, and that damping properties have also been significantly improved by generating the non-coupling interface. In particular, it was established that, as the depth of the non-coupling interface was increased, and the area of the interface was accordingly enlarged, damping properties were enhanced. However, in this Example, in which a ratio of the depth of the non-coupling interface relative to the thickness of the material was 25%, damping effects were less than in the case of the comparative material, thus making it possible to conclude from this testing that a non-coupling interface with a depth equal to, or greater than, at least 30% should preferably be provided. (However, as will be described later, if evaluation is made after processing has been carried out on the shape of gear, the damping effect significantly improve, and thus, the lower limit of a preferred range of rate of interface depth has been set to 20%. Further, if members are different from each other in shape, it is believed that the range of the preferred depth varies.) Further, it was evident that performance in terms of damping properties varies, depending on the position at which the non-coupling interface is molded during this testing. Although, in this Example, a result was obtained suggesting that, as the diameter of a non-coupling interface increases, damping performance improves, this does not imply that, even when the parts of this Example are shaped, a better performance can necessarily always be obtained because the diameter of a non-coupling interface is greater. This is because performance can differ depending on a relationship between a position of a source of noise generation and a position of a non-coupling interface. In actuality, it is considered necessary to locate optimal position precisely on a part by part basis, after determining the source of noise generation.
Since at least in the case of a gear, the entire gear vibrates, it is thought that damping performance can be improved more significantly when a non-coupling interface has existed at a portion that is closer to the outer periphery, at which amplitude is the greatest.

### Example 2

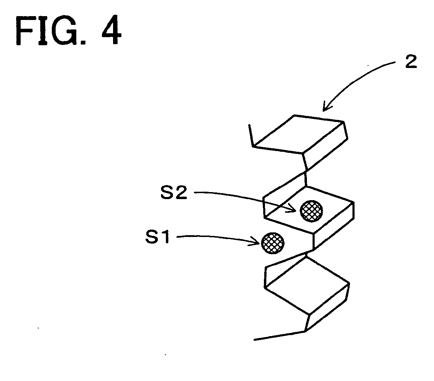

While Example 1 demonstrated the results of the evaluation of damping properties in a state of a damping material for mechanical parts (the damping material for gears) before gears are processed, it is naturally necessary to assess effects caused by processing gears that are parts that have been mounted. Therefore, as shown in Table 2, a module 3 and a spur gear 2 with 30 gears in number were fabricated by use of three types of materials (test Nos. E21 to E23) with a non-coupling interface of 13 mm in depth on which advantageous damping properties had had significant effects in Example 1 described above, the materials having diameters of 50 mm, 60 mm, and 75 mm, and a material (test No. E24) with a non-coupling interface of 3.5 mm in depth on which the depth of the interface is slightly shallow in comparison with the lower point of an evaluation material in Example 1 and having a non-coupling interface diameter of 60 mm was also used. Then, in an identical manner to that in Example 1 described above, damping properties were evaluated by means of a method according to which, in a state in which two wires had been suspended, vibration was applied by means of a hammer to the positions (an end face vibration applying position S1 and a gear face vibration applying position S2) shown in FIG. 4, by use of a laser displacement gauge and the degree of vibration of an end face of diagonal gears generated by applying vibration was measured. Testing was carried out with the use of a material having an interface depth of 3.5 mm in order to identify the lower limit of interface depth at which advantageous effects in a geared state can be clearly observed. The method for calculating a logarithmic decrement was similar to that in Example 1. In order to compare and clarify what differences exist in comparison with a conventional product, a similar types of evaluation was carried out, by preparing a test piece (test No. C21) obtained by a non-coupling interface free gear conforming to the same specification, the gear being fabricated of the same material (SCM420H), and by preparing a test piece fabricated with the use of a spherical graphite cast iron FCD500 (test No. C22) whose damping properties are known to be superior to those of steel. Table 2 illustrates the results. Furthermore, in Table 2, in an identical fashion to that used in Example 1, values are expressed in a ratio based on the premise that a logarithmic decrement (test No. C11 of Example 1) at the material stage of SCM420H (without a non-coupling interface) has been defined as 1.

[Table 2]

**(Table 2)**

| non-coupling interface diameter (mm) | non-coupling interface depth (mm) | ratio of depth toward whole thickness (%) | logarithmic decrement ratio | | test No. |
|---|---|---|---|---|---|
| | | | end face S1 | gear face S2 | |
| 50 | 13 | 81 | 28.0 | 27.0 | E21 |
| 60 | 13 | 81 | 72.3 | 52.6 | E22 |
| 75 | 13 | 81 | 199.8 | 231.7 | E23 |
| 60 | 3.5 | 22 | 4.0 | 3.6 | E24 |
| comparative material ① | 0 | 0 | 0.8 | 1.0 | C21 |
| comparative material ② | 0 | 0 | 1.4 | 1.3 | C22 |

| | | | | | |
|---|---|---|---|---|---|
| 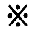 comparative material ①→SCM420H, comparative material ②→FCD500 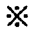 ratio of logarithmic decrement based on the premise that logarithmic decrement of the material of comparative material ① defined as 1 | | | | | |

As described above, while according to the results of Example 1 evaluated before the processing teeth of gear, advantageous effects produced by generating a non-coupling interface were at a maximum 5.4 times (logarithmic decrement ratio), advantageous effects (logarithmic decrement ratio) exceeding at a maximum 200 times were obtained in a case in which evaluation was performed in a state of a spur gear after processing teeth. One factor contributing to the attainment of these outstanding effects, is believed to be that the distance from a non-coupling interface had become close at a gear bottom as a result of gear processing, as has already been described, but it is also believed that in comparison with a material formed in the shape of a simple disk, when a non-coupling interface has been generated, the gear shape of a spur gear is obtained in the form of a shape that is suitable for the enhancement of damping properties. Furthermore, with respect to a gear whose interface depth is 3.5 mm, damping effects of the order of four times as high as usual were obtained.

Further, in comparison with FCD500 (C22) which is one of a spherical graphite cast iron, and whose damping properties have been conventionally superior to those of steel, it was verified that the advantageous effects of the present invention were extremely significant.

### Example 3

While, in Example 2 described above, an evaluation was made with the use of a spur gear in a mechanically processed state, an actual gear is often subjected to carburizing treatment in order to meet the strength required, and there is thus a need to understand precisely the nature of the influence exerted by that treatment. Therefore, the gears used in Example 2 described above were used in exactly the same state, and an identical evaluation of damping properties was performed by applying carburizing treatment of 930 °c x 4hr. In Example 2 described above, for the purpose of evaluating damping properties, a material intended for evaluation was suspended by means of wires, vibration was applied and evaluation was conducted in a state in which a gear side face came into contact with the wires. However, in Example 3, in order to reduce the extent of influence exerted by wire contact, the evaluation was made in a state in which the side face did not come into contact with the wires. In addition, the evaluation was carried out so as to cover both pre-carburizing andpost-carburizing. The results are shown in FIG. 3 (measurement result at end face vibration applying position S1 of FIG. 4) and Table 4 (measurement results at the gear face vibration applying position S2 of FIG. 4). With respect to the numerical values shown in Tables 3 and 4, on the basis of a logarithmic decrement of a spur gear (test No. C21 before carburizing) being defined as 1, without the non-coupling interface SCM420H that serves a comparative material, the logarithmic decrement of each gear test piece has been displayed as a ratio.

[Table 3]

**(Table 3)**

| non-coupling interface diameter (mm) | non-coupling interface depth (mm) | ratio of depth toward whole thickness (%) | logarithmic decrement ratio | | test No. |
|---|---|---|---|---|---|
| | | | pre-carburizing | post-carburizing | |
| 50 | 13 | 81 | 42.0 | 75.2 | E31 |
| 60 | 13 | 81 | 61.7 | 93.8 | E32 |
| 75 | 13 | 81 | 379.6 | 824.6 | E33 |
| 60 | 3.5 | 22 | 4.7 | 4.8 | E34 |
| comparative material ① | 0 | 0 | 1.0 | 0.8 | C31 |
| comparative material ② | 0 | 0 | 1.9 | 3.8 | C32 |

| | | | | | |
|---|---|---|---|---|---|
| 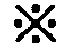 comparative material ①→SCM420H. comparative material ②→FCD500 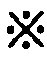 ratio of logarithmic decrement based on the premise that logarithmic decrement comparative material ① before carbon immersion defined as 1 | | | | | |

[Table 4]

**(Table 4)**

| non-coupling interface diameter (mm) | non-coupling interface depth (mm) | ratio of depth toward whole thickness (%) | logarithmic decrement ratio | | test No. |
|---|---|---|---|---|---|
| | | | pre-carburizing | post-carburizing | |
| 50 | 13 | 81 | 39.6 | 65.1 | E41 |
| 60 | 13 | 81 | 76.3 | 106.1 | E42 |
| 75 | 13 | 81 | 364.6 | 998.2 | E43 |
| 60 | 3.5 | 22 | 3.8 | 4.0 | E44 |
| comparative material ① | 0 | 0 | 1.0 | 0.8 | C41 |
| comparative material ② | 0 | 0 | 1.7 | 2.0 | C42 |

| | | | | | |
|---|---|---|---|---|---|
| 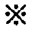 comparative material ①→SCM420H, comparative material ②→FCD500 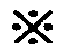 ratio of logarithmic decrement based on the premise that logarithmic decrement comparative material ① before carbon immersion defined as 1 | | | | | |

As is obvious from Tables 3 and 4, it is evidenced that the advantageous effects obtained by forming a non-coupling interface according to the present invention can be regarded as leading to a substantial improvement in a damping properties, irrespective of whether or not carburizing is carried out. Furthermore, although the causes were not clear, a tendency that, judging from the results obtained, a tendency is apparent for the improvement in damping properties caused by a non-coupling interface to become eases more pronounced after carburizing. In addition, as a result of changing the method of suspension of wires at the time of evaluation, the difference in damping properties between the gear according to the present invention and that made of a comparative material became much more significant, and a remarkable improvement in the damping rate, about 1000 times as high as usual at maximum was verified (E43). Further, as to the evaluation before gears were processed, in the case where an interface depth was 3.5 mm (E34 and E44), although an improvement in damping properties could hardly be verified, advantageous effects were nonetheless significantly enhanced by means of gear processing. As in the case of the results in Table 2, it was successfully verified that in comparison with a gear without a non-coupling interface, advantageous effects of the order of four times as high as usual could be obtained in the logarithmic decrement.

### Example 4 (comparative example)

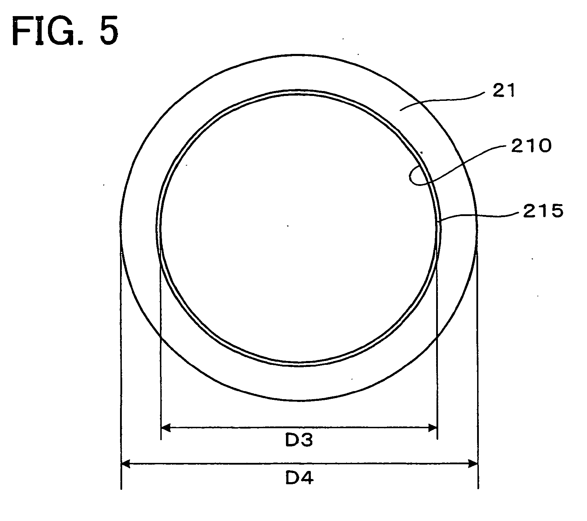

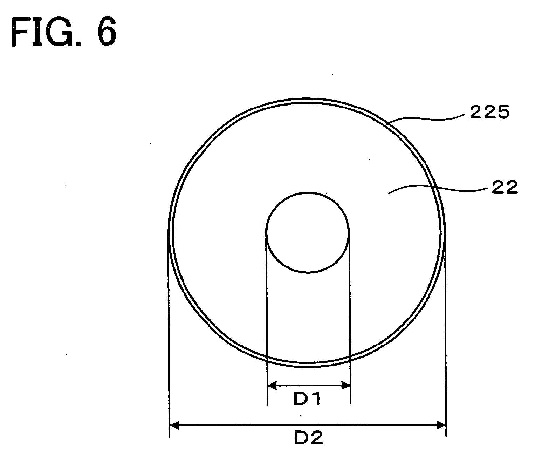

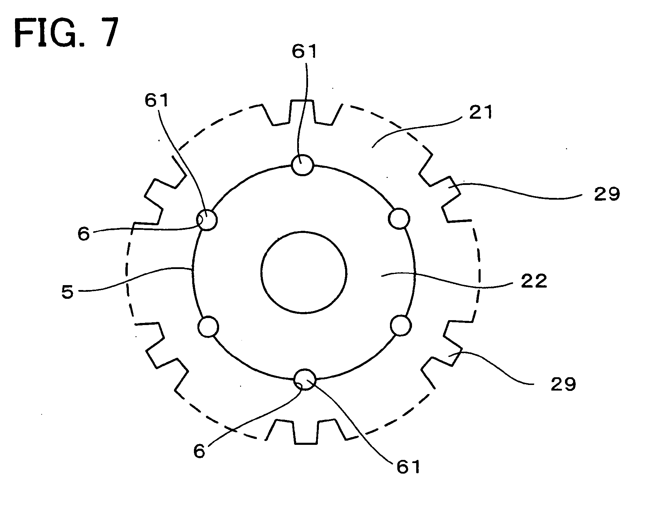

In this Example, a spur gear was prepared in which a non-coupling interface was formed by means of pressing and evaluated as a test piece.
As in the case of Example 2 described above, although a test piece was obtained as a spur gear having a thickness of 16 mm, a module 3, 30 gears, and an internal diameter of 25 mm, as shown in FIG. 5 and FIG. 6, this test piece was fabricated by pressing a second material 22 located at the internal diameter side into a penetrating hole portion 210 of a first material 21 located at the outer diameter side, and by then applying mechanical processing for forming gear portions or the like. In addition, as shown in FIG. 7, some of the test pieces were singled out so that through holes 6 could be provided and a pin 61 pressed into six portions in a peripheral direction of a non-coupling interface 5 in the spur gear 2 obtained. In addition, as shown in FIG. 7, processing was carried out so that a gear 29 is at the center and on the extension of the through hole 6. In the Figure, a description of gears has partially been omitted and the outer periphery end thereof has been indicated by way of a wavy line.

In order to change the non-coupling interface 5, as shown in FIG. 6, the outer diameters D2 of the second material 22 were prepared as three types of 45.09 mm, 60.11 mm, and 75.15 mm (the inner diameters D1 thereof were all 25 mm). In addition, as shown in FIG. 5, three types of internal diameters D3 of the hole portion 210 were prepared as 75.00 mm, 60.00 mm, and 45.00 mm (the outer diameters thereof were all 95.8 mm) as the first material 21. In addition, a chamfer portion 225 was provided at the outer periphery corner portion of the secondmaterial 22, and a chamfer portion 215 was provided at the inner periphery corner portion of the first material 21.

Two types of pressing techniques, i.e., a cool pressing technique and a scale pressing technique described below, were employed as a more specific method for fabricating the test pieces described above.
In the cool pressing technique, two components (a first material 21 and a second material 22) were pressed at room temperature. In the scale pressing technique, the above two components that were to be pressed were heated at 900 °c x 1 hr, and a state was established in which a scale is attached to a surface, and then, cool pressing was carried out. The thickness of the scale was of the order of 100 microns.

In the case of the scale pressing technique described above, while some scales dropped from the surface at the time of pressing, other scales were successfully pressed into a state in which they could be left intact on a non-coupling interface. After the pressing, an evaluation of damping properties was carried out. The method that was used for evaluating damping properties was identical to that in Example 3.
In addition, Table 5 illustrates types and test results of the test pieces fabricated. A comparative product (test No. C51) was the same as the comparative material 1 (C21) in Example 2.

[Table 5]

**(Table 5)**

| non-coupling interface diameter (mm) | method of pressing | with or without pin | logarithmic decrement ratio | | test No. |
|---|---|---|---|---|---|
| | | | end face S1 | gear face S2 | |
| 45 | scale pressing | non | 2.8 | 2.7 | E51 |
| | cool pressing | non | 1.4 | 1.3 | E52 |
| | | exist | 7.5 | 7.5 | E53 |
| 60 | scale pressing | non | 8.2 | 7.3 | E54 |
| | cool pressing | non | 3.1 | 3.0 | E55 |
| | | exist | 8.5 | 8.4 | E56 |
| 75 | scale pressing | non | 3.9 | 3.7 | E57 |
| | cool pressing | non | 1.7 | 1.8 | E58 |
| comparative material | - | - | 1.0 | 1.0 | C51 |

As can be discerned from Table 5, as a result of the non-coupling interface generated by pressing, in terms of a logarithmic decrement, damping properties were improved in a range of from 1.3 times to 8.5 times. In particular, with respect to the materials (E53 and E56) whose interface area was increased by inserting a pin, in comparison with all other test pieces, highly advantageous effects were obtained in terms of enhancing damping properties. In addition, in cases where scales were attached onto the surface in advance and pressed therein (E51 and E54), damping properties were enhanced in comparison with cases in which no scales were attached. From these results, it is evident that improvements in damping properties are more pronounced in cases where a scale exists on the interface.

In other words, in cases where a non-coupling interface has been formed by means of pressing, in cases where scales become narrow on the non-coupling interface, in comparison with cases in which no scales exist, damping properties are more considerably enhanced. Thus, it is desirable that manufacturing be carried out in accordance with a process in which the scale is sandwiched between the interfaces.

However, in comparison with a spur gear on which a non-coupling interface has been molded and prepared by means of forging, as demonstrated in each of the Examples described earlier, in cases where a non-coupling interface is formed by means of pressing, the advantageous effects obtained by an enhancement of damping properties diminished, and there was no evidence of the tendency for damping properties to be enhanced, as the diameter of the non-coupling interface increased. Furthermore, pressing is inferior to forging in terms of productivity. Therefore, it is desirable that the non-coupling interface be molded to its required maximum by means of forging. However, in circumstances where for any reason, the advantages of carrying out die forging cannot be sufficiently obtained, for example, because the parts are too big, or only a small number of products is to be manufactured, it is possible to select a method of enhancing damping properties by means of pressing.

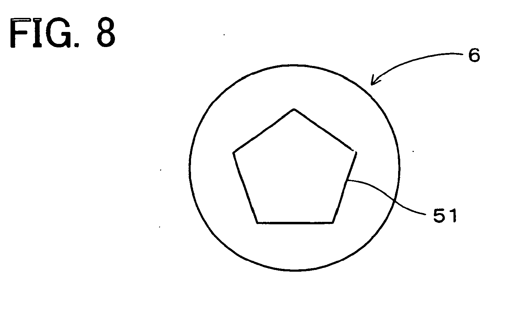

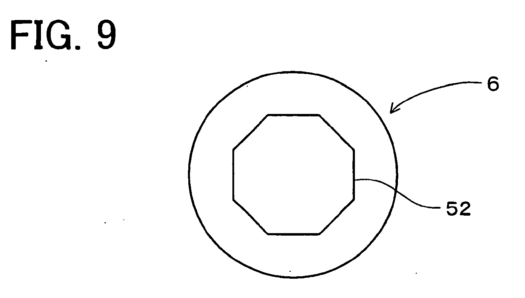

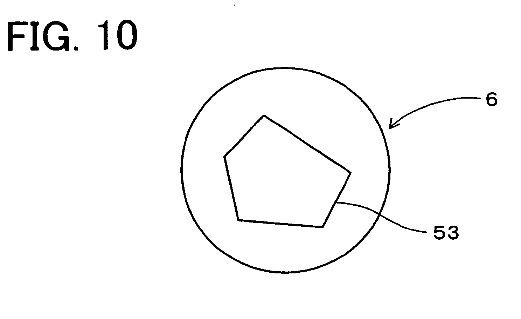

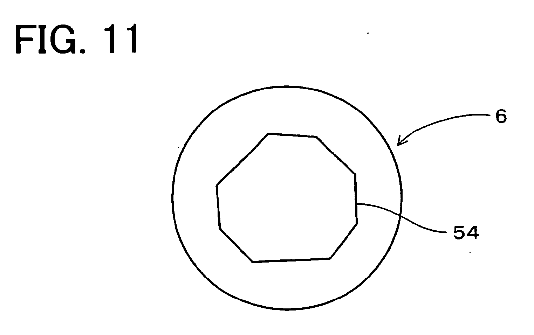

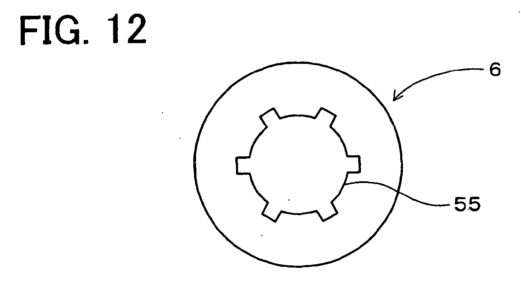

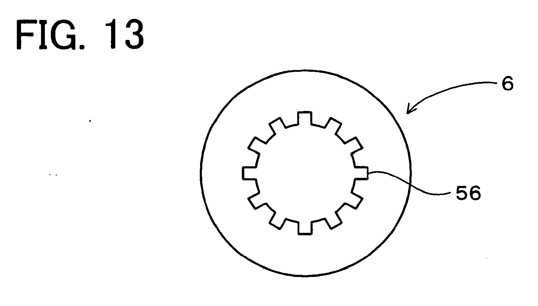

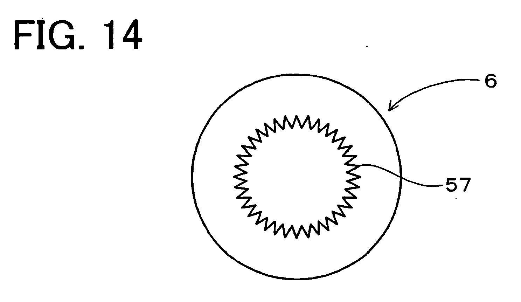

In each of Examples 1 to 4 described above, all of the non-coupling interfaces were formed in a circular shape so as order to facilitate testing. However, in the present invention, a non-coupling interface may have an increased level of damping properties. Thus, it is, of course, possible to form the interface in another shape without being limited to such a circular shape.
For example, as illustrated in FIG. 8 and FIG. 9, on the assumption that a member 6 as a material for mechanical parts or mechanical parts is formed in a disk shape, regular polygonal non-coupling interfaces 51 and 52 can be formed. Further, as shown in FIG. 10 and FIG. 11, non-coupling interfaces 53 and 54 which exhibit an asymmetrical and inequilateral polygon may be provided. In particular, in cases where a non-coupling interface is formed by pressing it into a penetrating hole portion, in order to enable a torque to be stably transmitted, a shape other than a circular shape, is formed, for example a polygon of the type described above, thereby making it necessary to prevent slippage of parts located at the outer diameter side and at the inner diameter side on the non-coupling interface. Each of FIG. 12 to FIG. 14 illustrates a further example of the non-coupling interface shape. FIG. 12 illustrates an example in which a non-coupling interface 55 has been provided in a rectangular spline shape. FIG. 13 illustrates an example in which a non-coupling interface 56 has been provided in an involute spline shape. FIG. 14 illustrates an example in which a non-coupling interface 57 has been provided in a serration shape.

In addition, as illustrated in FIG. 10 and FIG. 11, in cases where non-coupling interfaces 53 and 54 or the like are employed of an inequilateral polygon, it is believed that in comparison with cases in which an equilateral polygon is formed, damping properties are enhanced, by virtue of the reasons described below.
Specifically, as in the case of a gear, if teeth are formed at equal intervals on an inner diameter side or on an outer diameter side, the mating of gear pairs is obtained in a predetermined specific frequency corresponding to frequency of rotation and the number of teeth. In addition, torque can also generated in a predetermined specific frequency, in an identical manner. In cases when a non-coupling interface is formed in the shape of an equilateral polygon, in response to a torque from a gear face where mating occurs, or to periodic transmission of vibration, the non-coupling interface also receives such torque or vibration at a frequency that conforms with the number of corners, and thus, there is a danger that the advantageous effects of damping vibration will be diminished. If, in response thereto, an inequilateral interface is provided, interfaces that damp vibration are obtained at indefinite intervals, it is expected that a further improvement in damping effects in an actual gear-driving environment.

### Example 5

As illustrated in Examples 1 to 4, it has been verified that significant effects can be attained with regard to damping properties by forming a non-coupling interface. However, if the degree of strength is drastically lowered in the course of molding the non-coupling interface, and an impediment arises, in actual practice it becomes difficult to use the interface as mechanical parts. Therefore, in respect of the test pieces described above, the strength of the gears has been evaluated by carrying out a gear base bending test, with the use of a spur gear serving as a test piece which has a non-coupling interface diameter of 60 mm and a non-coupling interface depth of 13 mm (E42 of Example 3 subjected to 930 °C x 4 hr carburizing treatment).
As a result, as in the present invention, even a gear that has been processed with the use of a material that has a non-coupling interface, it has been successfully verified that breakage does not occur from the non-coupling interface, and that, if a degree of stress that becomes a limit is exceeded, the limit on strength occurs as a result of the breakage of the gear processed at the outer periphery. It may be assumed that this is because a significant level of stress is applied to the gears on the outer periphery, and that a large degree of stress and load is not applied at the position at which the non-coupling interface has been molded. In addition, at the same time, testing was carried out on gears that conformed to the same specification, and the gears were manufactured with the use of a material that does not have a non-coupling interface. However, with respect to the maximum stress at which no gear breakage occurs, in the case of gears having a non-coupling interface, as in the present invention, no significant difference was observed from the value evaluated.

From these results, there are portions at which significant stress is applied, and portions where no such stress is applied, and even in cases where a non-coupling interface has been introduced, as in the present invention, if that interface has been molded at a portion at which significant stress is not applied on the mechanical parts, it has been clear that in comparison with conventional mechanical parts that do not have a non-coupling interface, an extreme change in strength does not occur.

As has been described above, in the damping material for mechanical parts according to the present invention, a non-coupling interface that is not metallically coupled is molded by means of plastic processing, and/or by mechanical processing, or by means of pressing, thus, in comparison with a conventional material that does not have a non-coupling interface, making it possible to enhance damping properties significantly. In particular, in cases where processing has been carried out on actual parts such as gears, impressive effects can be achieved insofar, in comparison with the damping properties of a material before processing, that even more impressive damping properties can be attained, and advantageous effects can be attained regardless of whether or not carburizing treatment, a typical surface curing treatment, is undertaken.

An addition features of the present invention is that a non-coupling interface is molded by plastic processing and/or mechanical processing, or by means of pressing, thus making it possible to mold a non-coupling interface as long as these processing activities remain possible, and limitations on materials are minimal in comparison with circumstances where cracks are generated by utilizing thermal shock. Therefore, it is possible to select an optimal material so as to conform with the portion to be used, and with the characteristics required.

Further, when a non-coupling interface is molded by means of mechanical processing or plastic processing or by means of pressing, the non-coupling interface can of course, be molded by arbitrarily selecting a portion that is suitable for the mechanical parts. Thus, by selecting a portion at which a significant degree of stress is not applied, and by then molding the non-coupling interface, in comparison with conventional mechanical parts, damping properties can be substantially enhanced, with almost no lowering of strength.

## Claims

1. A damping material for mechanical parts, comprising a non-coupling interface (50, 51, 52, 53, 54, 55, 56, 57) that comes into contact without being metallically coupled, the non-coupling interface (50, 51, 52, 53, 54, 55, 56, 57) being formed by hot forging a groove portion (5) formed by plastic processing and/or mechanical processing in a direction in which an internal space of the groove portion (5) is reduced, and wherein
the non-coupling interface (50, 51, 52, 53, 54, 55, 56, 57) is formed in a ring shape and is formed from a surface to a predetermined internal depth (d), and does not penetrate.

2. The damping material according to claim 1, wherein the extent of the depth (d) of the non-coupling interface (50, 51, 52, 53, 54, 55, 56, 57) is equal to or greater than 20 % of a dimensional thickness in an identical direction.

3. The damping material according to claim 1 or 2, wherein the damping material for mechanical parts is a gear damping material for forming a gear (29) having damping characteristics and has a main body portion formed in a ring shape or in a disk shape, and a predetermined portion to form a teeth shape provided at an outer periphery side face or at an inner periphery side face thereof, and wherein the non-coupling interface (50, 51, 52, 53, 54, 55, 56, 57) is formed from at least one end face in an axial direction of the main body portion.

4. The damping material according to any one of claims 1 to 3, wherein the non-coupling interface (50, 51, 52, 53, 54, 55, 56, 57) is formed in a circular shape.

5. The damping material according to any one of claims 1 to 3, wherein the non-coupling interface (50, 51, 52, 53, 54, 55, 56, 57) is formed in an asymmetrical shape.

6. A method for manufacturing a damping material for mechanical parts, the damping material having a non-coupling interface (50, 51, 52, 53, 54, 55, 56, 57) that comes into contact without being metallically coupled, the method comprising:
a groove portion forming step of molding by means of plastic processing and/or mechanical processing a groove portion (5) that serves as a base of a non-coupling interface (50, 51, 52, 53, 54, 55, 56, 57) formed in a ring shape on a surface of the material; and
a compression step of applying hot forging in a direction in which an internal space of the groove portion (5) is reduced, and by then establishing a state in which contact is made with opposing internal wall faces, thereby forming the ring shaped non-coupling interface (50, 51, 52, 53, 54, 55, 56, 57).

7. The method according to claim 6, wherein the groove forming step is carried out by means of forging, with the use of a die having a protrusive portion that corresponds to the groove portion (5).

8. A mechanical part, fabricated by applying processing to the damping material for mechanical parts according to any one of claims 1 to 5.

## Patentansprüche

1. Dämpfungsmaterial für mechanische Teile, das eine nicht-koppelnde Berührungsfläche (50, 51, 52, 53, 54, 55, 56, 57) umfasst, die in Kontakt ist, ohne metallisch gekoppelt zu sein, wobei die nicht-koppelnde Berührungsfläche (50, 51, 52, 53, 54, 55, 56, 57) durch Warmschmieden eines Rillenabschnitts (5), der durch plastisches Verarbeiten und/oder mechanisches Verarbeiten gebildet worden ist, in einer Richtung, in der ein Innenraum des Rillenabschnitts (5) vermindert wird, gebildet wird, und wobei
die nicht-koppelnde Berührungsfläche (50, 51, 52, 53, 54, 55, 56, 57) in einer Ringform ausgebildet ist und von einer Oberfläche zu einer vorgegebenen inneren Tiefe (d) ausgebildet ist und nicht hindurchdringt.

2. Dämpfungsmaterial nach Anspruch 1, bei dem das Ausmaß der Tiefe (d) der nicht-koppelnden Berührungsfläche, (50, 51, 52, 53, 54, 55, 56, 57) gleich oder größer als 20 % einer Dickenabmessung in der gleichen Richtung ist.

3. Dämpfungsmaterial nach Anspruch 1 oder 2, wobei das Dämpfungsmaterial für mechanische Teile ein Zahnraddämpfungsmaterial zur Bildung eines Zahnrads (29) mit Dämpfungseigenschaften ist und einen Hauptkörperabschnitt, der in einer Ringform oder in einer Scheibenform ausgebildet ist, und einen vorgegebenen Abschnitt zur Bildung einer Zahnform, der an einer Außenumfangsseitenfläche oder einer Innenumfangsseitenfläche davon ausgebildet ist, aufweist, und wobei die nicht-koppelnde Berührungsfläche (50, 51, 52, 53, 54, 55, 56, 57) von mindestens einer Endfläche in einer axialen Richtung des Hauptkörperabschnitts ausgebildet ist.

4. Dämpfungsmaterial nach einem der Ansprüche 1 bis 3, bei dem die nicht-koppelnde Berührungsfläche (50, 51, 52, 53, 54, 55, 56, 57) in einer Kreisform ausgebildet ist.

5. Dämpfungsmaterial nach einem der Ansprüche 1 bis 3, bei dem die nicht-koppelnde Berührungsfläche (50, 51, 52, 53, 54, 55, 56, 57) in einer asymmetrischen Form ausgebildet ist.

6. Verfahren zur Herstellung eines Dämpfungsmaterials für mechanische Teile, wobei das Dämpfungsmaterial eine nicht-koppelnde Berührungsfläche (50, 51, 52, 53, 54, 55, 56, 57) aufweist, die in Kontakt ist, ohne metallisch gekoppelt zu sein, wobei das Verfahren umfasst:
einen Schritt zur Bildung eines Rillenabschnitts, bei dem ein Rillenabschnitt (5), der als Basis einer nicht-koppelnden Berührungsfläche (50, 51, 52, 53, 54, 55, 56, 57) dient, durch plastisches Verarbeiten und/oder mechanisches Verarbeiten geformt und in einer Ringform auf einer Oberfläche des Materials gebildet wird, und
einen Kompressionsschritt, bei dem ein Warmschmieden in einer Richtung durchgeführt wird, in der ein Innenraum des Rillenabschnitts (5) vermindert wird, und bei dem dann ein Zustand hergestellt wird, bei dem ein Kontakt mit gegenüber liegenden Innenwandflächen hergestellt wird, wodurch die ringförmige nicht-koppelnde Berührungsfläche (50, 51, 52, 53, 54, 55, 56, 57) gebildet wird.

7. Verfahren nach Anspruch 6, bei dem der Schritt zur Bildung der Rille mittels Schmieden unter Verwendung eines Gesenks mit einem vorragenden Abschnitt, der dem Rillenabschnitt (5) entspricht, durchgeführt wird.

8. Mechanisches Teil, das durch Verarbeiten des Dämpfungsmaterials für mechanische Teile gemäß einem der Ansprüche 1 bis 5 hergestellt worden ist.

## Revendications

1. Matériau amortisseur pour pièces mécaniques, comprenant une interface de non couplage (50, 51, 52, 53, 54, 55, 56, 57) qui entre en contact sans être couplée de façon métallique, l'interface de non couplage (50, 51, 52, 53, 54, 55, 56, 57) étant formée en forgeant à chaud une partie de rainure (5) formée par un traitement plastique et/ou un traitement mécanique dans une direction dans laquelle une espace interne de la partie de rainure (5) est réduit, et dans lequel
l'interface de non couplage (50, 51, 52, 53, 54, 55, 56, 57) est formée sous une forme annulaire et est formée à partir d'une surface à une profondeur interne prédéterminée (d), et ne pénètre pas.

2. Matériau amortisseur selon la revendication 1, dans lequel l'étendue de la profondeur (d) de l'interface de non couplage (50, 51, 52, 53, 54, 55, 56, 57) est égale ou supérieure à 20 % d'une épaisseur dimensionnelle dans une direction identique.

3. Matériau amortisseur selon la revendication 1 ou 2, dans lequel le matériau amortisseur pour pièces mécaniques est un matériau amortisseur pour engrenage pour former un engrenage (29) qui présente des caractéristiques d'amortissement et qui comprend une partie de corps principal formée sous une forme annulaire ou sous la forme d'un disque, et une partie prédéterminée pour former une forme de dent qui est prévue sur une face latérale périphérique extérieure ou sur une face latérale périphérique intérieure de celui-ci, et dans lequel l'interface de non couplage (50, 51, 52, 53, 54, 55, 56, 57) est formée à partir d'au moins une face d'extrémité dans une direction axiale de la partie de corps principal.

4. Matériau amortisseur selon l'une quelconque des revendications 1 à 3, dans lequel l'interface de non couplage (50, 51, 52, 53, 54, 55, 56, 57) est formée sous une forme circulaire.

5. Matériau amortisseur selon l'une quelconque des revendications 1 à 3, dans lequel l'interface de non couplage (50, 51, 52, 53, 54, 55, 56, 57) est formée sous une forme asymétrique.

6. Procédé de fabrication d'un matériau amortisseur pour des pièces mécaniques, le matériau amortisseur comprenant une interface de non couplage (50, 51, 52, 53, 54, 55, 56, 57) qui entre en contact sans être couplé de façon métallique, le procédé comprenant:
une étape de formation de partie de rainure pour mouler au moyen d'un traitement plastique et/ou d'un traitement mécanique une partie de rainure (5) qui sert de basse à une interface de non couplage (50, 51, 52, 53, 54, 55, 56, 57) formée sous une forme annulaire sur une surface du matériau, et
une étape de compression pour appliquer un forgeage à chaud dans une direction dans laquelle un espace interne de la partie de rainure (5) est réduit, et en établissant ensuite un état dans lequel un contact est réalisé avec des faces de paroi internes opposées, formant ainsi l'interface de non couplage de forme annulaire (50, 51, 52, 53, 54, 55, 56, 57).

7. Procédé selon la revendication 6, dans lequel l'étape de formation de rainure est exécutée au moyen d'un forgeage en utilisant une matrice présentant une partie saillante qui correspond à la partie de rainure (5).

8. Pièce mécanique, fabriquée en appliquant un traitement au matériau amortisseur pour des pièces mécaniques selon l'une quelconque des revendications 1 à 5.
